# EUROPEAN PATENT APPLICATION

(11) **EP 4 369 807 A1**
(43) Date of publication of application: **15.05.2024**
(21) Application number: 23207712.3
(22) Date of filing: 03.11.2023
(51) Int. Cl.: H04W 60/00, H04W 8/26

(54) **EQUIVALENT SNPNS AND GUTIS INDICATED BY UE**

(30) Priority: 10.11.2022 US 202263383106 P; 01.11.2023 US 202318500053
(71) Applicant: MEDIATEK INC., Hsin-Chu 300 (TW)
(72) Inventor: LIN, Yuan-Chieh, 30078 Hsinchu City (TW); LAI, Chia-Lin, 30078 Hsinchu City (TW)
(74) Representative: Hoefer & Partner Patentanwälte mbB

(57) **Abstract**

Methods and apparatus are provided for mobile identity selection for SNPN initial registration. In one novel aspect, the UE selects a GUTI as a registration GUTI for registration with a current SNPN based on one or more selection rules. The UE indicates the selected registration GUTI in a 5GS mobile identity information element (IE) and includes the NID of the corresponding prior SNPN in an NID IE. The selection rules include prioritizing a GUTI previously assigned by an equivalent SNPN or any other SNPN with a globally-unique SNPN ID over a GUTI previously assigned by an equivalent SNPN or any other SNPN with a non-global-unique SNPN ID; and prioritizing a GUTI previously assigned by an equivalent SNPN over a GUTI previously assigned by any other SNPN when the equivalent SNPN and the any other SNPN are both identified by a globally-unique SNPN identity.

## Description

### Field of the Invention

The disclosed embodiments relate generally to wireless mobile communication network, and, more particularly, to standalone non-public network (SNPN) and global unique temporary identities (GUTIs).

### Background of the Invention

In today's rapidly evolving digital landscape, the demand for secure, private, and efficient communication networks has never been more critical. Industries such as manufacturing, healthcare, and logistics require robust solutions that ensure data confidentiality, integrity, and availability. A Public Land Mobile Network (PLMN) is a network established and operated by an administration or recognized operating agency (ROA) for the specific purpose of providing land mobile communication services to the public. PLMN provides communication possibilities for mobile users. A PLMN may provide service in one or a combination of frequency bands. Access to PLMN services is achieved by means of an air interface involving radio communications between mobile phones and base stations with integrated IP network services. One PLMN may include multiple radio access networks (RAN) utilizing different radio access technologies (RAT) for accessing mobile services. A radio access network is part of a mobile communication system, which implements a radio access technology. Conceptually, RAN resides between a mobile device and provides connection with its core network (CN). Depending on the standard, mobile phones and other wireless connected devices are varyingly known as user equipment (UE), terminal equipment, mobile stations (MS), etc. Examples of different RATs include 2G GERAN (GSM) radio access network, 3G UTRAN (UMTS) radio access network, 4G E-UTRAN (LTE), 5G new radio (NR) radio access network, and other non-3GPP access RAT including WiFi.

Compared to PLMN, a non-public network (NPN) is a 5GS deployed network for non-public use. An NPN is either a Stand-alone Non-Public Network (SNPN), i.e., operated by an NPN operator and not relying on network functions provided by a PLMN; or a Public Network Integrated NPN (NPI-NPN), i.e., a non-public network deployed with the support of a PLMN. The combination of a PLMN ID and Network identifier (NID) identifies an SNPN. A UE may be enabled for SNPN. The UE selects an SNPN for which it is configured with a subscriber identifier and credentials. The UE can have several sets of subscriber identifiers, credentials, and SNPN identities. When accessing or registering with a SNPN, the UE needs to select a registration ID. The selection needs to be designed to avoid possible registration ID mix up.

Improvement and enhancement are required for GUTI selection, which is indicated by the UE for SNPN registration.

### Summary of the Invention

This is achieved by a method and user equipment according to claims 1 and 2. The dependent claims pertain to corresponding further developments and improvements.

As will be seen more clearly from the detailed description following below, methods and apparatus are provided for mobile identity selection for SNPN initial registration. In one novel aspect, the UE maintains a set of GUTIs previously assigned by corresponding prior SNPN and selects a GUTI as a registration GUTI for registration with a current SNPN based on one or more selection rules. In one embodiment, the selection rules include prioritizing a GUTI previously assigned by an equivalent SNPN or any other SNPN with a globally-unique SNPN ID over a GUTI previously assigned by an equivalent SNPN or any other SNPN with a non-global-unique SNPN ID. In another embodiment, the one or more selection rules further include prioritizing a GUTI previously assigned by an equivalent SNPN over a GUTI previously assigned by any other SNPN when the equivalent SNPN and the any other SNPN are both identified by a globally-unique SNPN identity. In yet another embodiment, the one or more selection rules includes prioritizing a GUTI previously assigned by an equivalent SNPN or any other SNPN with a globally-unique SNPN ID over the one or more UE identifiers, wherein the E identifiers comprises subscriber concealed identifier (SUCI) and permanent equipment identifier (PEI). In one embodiment, the UE indicates the selected registration GUTI in a 5GS mobile identity information element (IE) and includes the NID of the corresponding prior SNPN in an NID IE.

Other embodiments and advantages are described in the detailed description below. This summary does not purport to define the invention. The invention is defined by the claims.

### Brief Description of the Drawings

Figure 1 schematically illustrates a communication system 100 having multiple SNPN networks in accordance with embodiments of the current invention.
Figure 2 illustrates simplified block diagrams of a user equipment and a network entity in accordance with embodiments of the current invention.
Figure 3 illustrates exemplary diagrams of exemplary GUTI entries assigned by different SNPN for the selection to the registration request in accordance with embodiments of the current invention.
Figure 4 illustrates exemplary diagrams for the UE to selection a registration GUTI based on one or more selection rules in accordance with embodiments of the current invention.
Figure 5 illustrates exemplary diagrams for the selections rules for selecting the GUTI for the registration request to the SNPN in accordance with embodiments of the current inventions.
Figure 6 illustrates exemplary flow chart for the UE selecting a GUTI assigned by corresponding SNPN for the registration request to a current SNPN in accordance with embodiments of the current invention.

### Detailed Description

Reference will now be made in detail to some embodiments of the invention, examples of which are illustrated in the accompanying drawings.

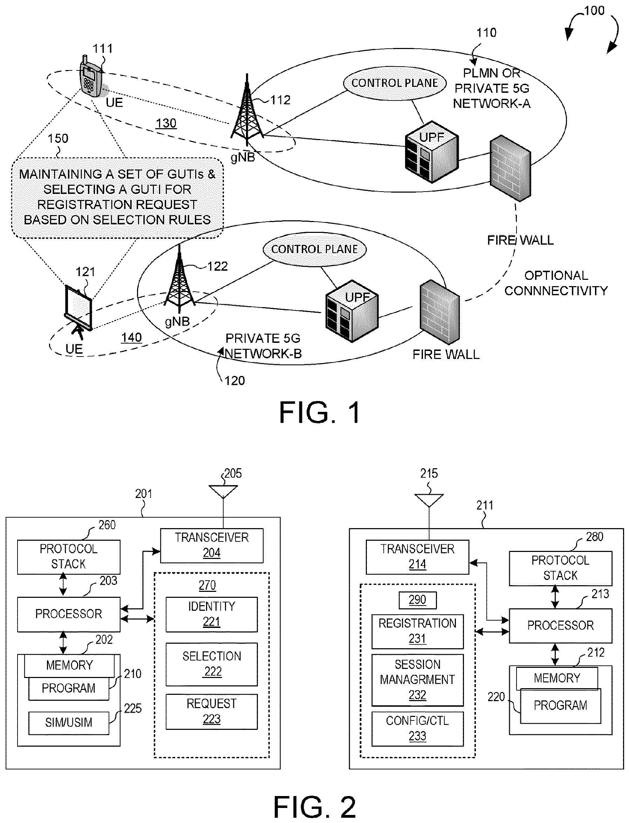

Figure 1 schematically illustrates a communication system 100 having multiple SNPN networks in accordance with embodiments of the current invention. Network 110, which can be a PLMN network or a SNPN network-A, comprises control plane functionalities, user plane functionality (UPF), and application servers that provides various services by communicating with a plurality of user equipments (UEs) including UE 111. UE 111 and its serving base station gNB 112 belong to part of a radio access network RAN 130. RAN 130 provides radio access for UE 111 via a radio access technology (RAT), e.g. 3GPP access and non-3GPP access. A mobility management entity (MME) or an access and mobility management function (AMF) in PLMN 110 communicates with gNB 112, and other serving GW and PDN GW for access and mobility management of wireless access devices in PLMN 110 (not shown).

Similarly, SNPN network-B 120 comprises control plane functionalities, user plane functionality (UPF), and application servers that provides various services by communicating with a plurality of user equipments (UEs) including UE 121. UE 121 and its serving base station gNB 122 belong to part of a radio access network RAN 140. RAN 140 provides radio access for UE 121 via a radio access technology (RAT), e.g. 3GPP access and non-3GPP access. AMME or AMF in SNPN 120 communicates with gNB 122, and other serving GW and PDN GW for access and mobility management of wireless access devices in SNPN 120 (not shown). UE 111 or 121 may be equipped with a radio frequency (RF) transceiver or multiple RF transceivers for different application services via different RATs.

The 5G system enables an NPN to request a third-party service provider to perform NPN authentication of a UE based on identities and/or credentials supplied by the third-party service provider. The 5G system enables an NPN to request a PLMN to perform NPN authentication of a UE based on identities and/or credentials supplied by the PLMN. A 5G system enables an SNPN to be able to request another SNPN (third-party service provider) to perform SNPN authentication of a UE based on identities and/or credentials supplied by the other SNPN (the third-party service provider). Specifically, an SNPN-enabled UE can support access to an SNPN using credentials from a credential holder (CH). Such UE can be configured with "a list of subscriber data", such as global unique temporary identities assigned by corresponding SNPN, containing one or more entries. Each entry, which represents a subscribed SNPN acting as a credential holder, consists of SNPN selection parameters for the purpose of access to a selected SNPN using credentials from the CH.

Based on SNPN selection parameters provided by the list of subscriber data, a UE can select an entry of "a list of subscriber data", and attempt to register to a selected SNPN / current SNPN using credentials from the subscribed SNPN. If the registration to the selected SNPN is successful, the UE gains access to the selected SNPN and is able to establish PDU sessions for data transmission and reception.

In accordance with one novel aspect 150, the UE maintains a set of GUTIs and selects, based on one or more selections rules, a registration GUTI for the REGISTRATION REQUEST sent to the current SNPN. In one embodiment, the selection rules comprising prioritizing a GUTI previously assigned by an equivalent SNPN or any other SNPN with a globally-unique SNPN ID over a GUTI previously assigned by an equivalent SNPN or any other SNPN with a non-global-unique SNPN ID. In another embodiment, the selection rules further includes prioritizing a GUTI previously assigned by an equivalent SNPN over a GUTI previously assigned by any other SNPN when the equivalent SNPN and the any other SNPN are both identified by a globally-unique SNPN identity.

Figure 2 illustrates simplified block diagrams of wireless devices, e.g., a UE 201 and network entity 211 in accordance with embodiments of the current invention. Network entity 211 may be a base station combined with an MME or AMF. Network entity 211 has an antenna 215, which transmits and receives radio signals. A radio frequency RF transceiver module 214, coupled with the antenna, receives RF signals from antenna 215, converts them to baseband signals and sends them to processor 213. RF transceiver 214 also converts received baseband signals from processor 213, converts them to RF signals, and sends out to antenna 215. Processor 213 processes the received baseband signals and invokes different functional modules to perform features in base station 211. Memory 212 stores program instructions and data 220 to control the operations of base station 211. In the example of Figure 2, network entity 211 also includes a set of control functional modules and circuit 290. Registration circuit 231 handles registration and mobility procedure. Session management circuit 232 handles session management functionalities. Configuration and control circuit 233 provides different parameters to configure and control UE.

Similarly, UE 201 has memory 202, a processor 203, and radio frequency (RF) transceiver module 204. RF transceiver 204 is coupled with antenna 205, receives RF signals from antenna 205, converts them to baseband signals, and sends them to processor 203. RF transceiver 204 also converts received baseband signals from processor 203, converts them to RF signals, and sends out to antenna 205. Processor 203 processes the received baseband signals and invokes different functional modules and circuits to perform features in UE 201. Memory 202 stores data and program instructions 210 to be executed by the processor to control the operations of UE 201. Suitable processors include, by way of example, a special purpose processor, a digital signal processor (DSP), a plurality of micro-processors, one or more micro-processor associated with a DSP core, a controller, a microcontroller, application specific integrated circuits (ASICs), file programmable gate array (FPGA) circuits, and other type of integrated circuits (ICs), and/or state machines. A processor in associated with software may be used to implement and configure features of UE 201.

UE 201 also comprises a set of functional modules and control circuits to carry out functional tasks of UE 201. Protocol stacks 260 comprise Non-Access-Stratum (NAS) layer to communicate with an MME or an AMF entity connecting to the core network, Radio Resource Control (RRC) layer for high layer configuration and control, Packet Data Convergence Protocol/Radio Link Control (PDCP/RLC) layer, Media Access Control (MAC) layer, and Physical (PHY) layer. System modules and circuits 270 may be implemented and configured by software, firmware, hardware, and/or combination thereof. The function modules and circuits, when executed by the processors via program instructions contained in the memory, interwork with each other to allow UE 201 to perform embodiments and functional tasks and features in the network. In one example, system modules and circuits 270 comprise identity module 221 that maintains a set of global unique temporary identities (GUTIs), wherein each GUTI is assigned by a corresponding standalone non-public network (SNPN), selection module 222 that selects, from the set of GUTIs, a registration GUTI assigned by a prior SNPN based on one or more selection rules comprising prioritizing a GUTI previously assigned by an equivalent SNPN or any other SNPN with a globally-unique SNPN ID over a GUTI previously assigned by an equivalent SNPN or any other SNPN with a non-global-unique SNPN ID, and request module 223 that sends a registration request message to the current SNPN based on the selected registration GUTI. Note that the set of GUTIs and corresponding SNPN information may be stored in UE memory.

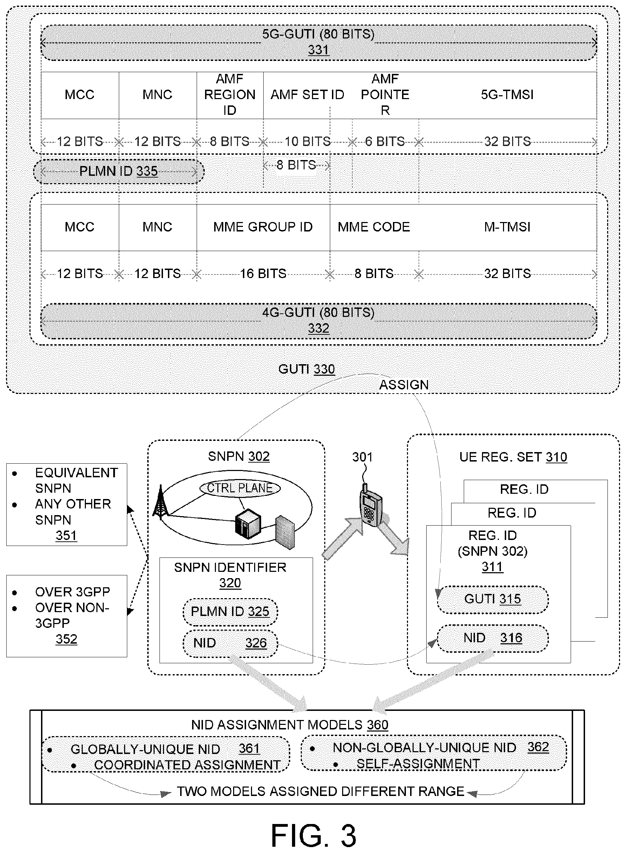

Figure 3 illustrates exemplary diagrams of exemplary GUTI entries assigned by different SNPN for the selection to the registration request in accordance with embodiments of the current invention. As an example, UE 301 previously registered with SNPN 302 and obtained a GUTI 311. GUTI 330 takes different formats for 5G and 4G. 5G-GUTI 331 includes a 12-bit mobile country code (MCC), a 12-bit mobile network code (MNC), an 8-bit AMF region ID, a 10-bit AMF set ID, a 6-bit AMF POINTER and a 32-bit 5G-TMSI (temporary mobile subscriber identity). 4G-GUTI 332 includes a 12-bit mobile network code (MNC), a 16-bit mobility management entity (MME) group ID, an 8-bit MME code and a 32-bit M-TMSI. Both 5G-GUTI 331 and 4G-GUTI 332 are 80-bit identities. The MCC and MNC together is defined as the PLMN ID 335. The combination of a PLMN ID and a network identifier (NID) identifies a SNPN. As an example, SNPN 302 is identified by the SNPN identifier 320, which includes PLMN ID 325 and NID 326. When UE 301 registered with SNPN 302, SNPN 320 assigns GUTI 315 to UE 301. In one embodiment, UE 301 maintains the GUTI 315 assigned by SNPN 302 together with NID of SNPN 302. As a result, UE 301 maintains a registration ID (assigned by SNPN 302) 311 including a GUTI ID 315 and NID 316. NID 316 is the same as NID 326 of SNPN 302, which assigns GUTI 315. In one embodiment, UE 301 maintains a registration set 310, which includes one or more registration IDs, such as registration ID 311. In one embodiment, the UE maintains a set of GUTIs and their corresponding assigning NIDs. In one novel aspect, UE 301 selects a registration ID based on one or more selection rules when registering to a new/current SNPN. The selection rules select a GUTI based on information of the prior SNPN that assigns the GUTI. In one embodiment 351, the SNPN assigning the GUTI is an equivalent SNPN or any other SNPN. In another embodiment 352, the prior SNPN assigns the GUTI over a 3GPP network, or over a non-3GPP network. In one novel aspect, the UE selection rules is based on NID assignment model. As an example, NID 326 of SNPN 302 supports two assignment models 360 including a globally-unique NID 361 and a non-globally-unique NID 362. Globally-unique NID 361 is assigned using coordinated assignment. The coordinated assignment has two options. The first option is that the NID is assigned such that it is globally unique independent of the PLMN ID used. The second option is that the NID is assigned such that the combination of the NID and PLMN ID is globally unique. Non-globally-unique NID 361 is by self-assignment. The NIDs are chosen individually by SNPNs at deployment time, which may result in non-unique. The two assignment models, the coordinated assignment and the self-assignment uses different numbering space. In one embodiment, UE 301 identifies the GUTI is assigned by a globally-unique SNPN or a non-globally-unique SNPN based on the range of the NID.

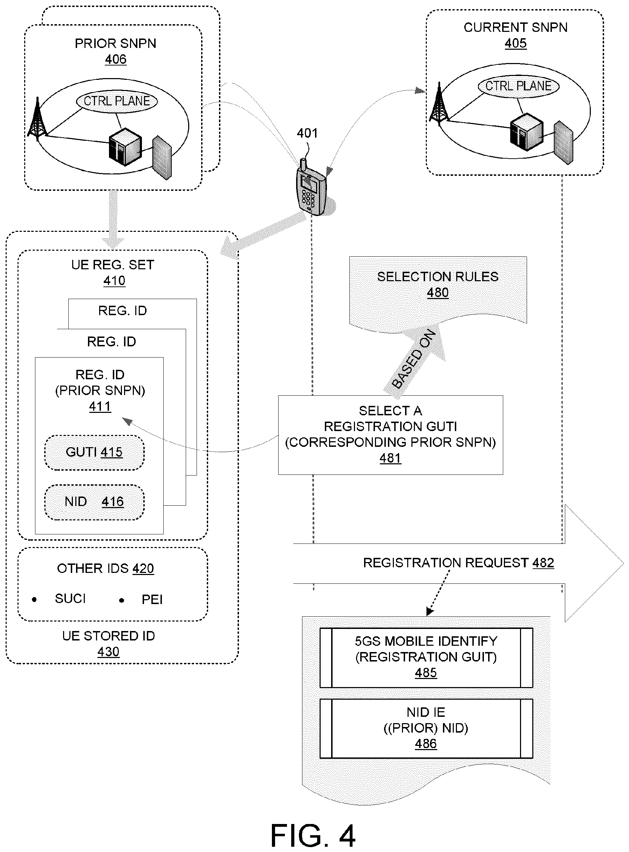

Figure 4 illustrates exemplary diagrams for the UE to select a registration GUTI based on one or more selection rules in accordance with embodiments of the current invention. UE 401 previously registered with one or more prior SNPNs 406. UE 401 maintains a registration set 410, which includes a set of registration IDs, such as registration 411. Registration 411 includes a GUTI 415 and an NID 416 of its corresponding assigning SNPN. In one embodiment, UE maintains a set of stored IDs 430, which includes UE registration set 410 and other IDs 420, such as subscriber concealed identifier (SUCI), and permanent equipment identifier (PEI). At step 481, UE 401 selects a GUTI and its associated/corresponding NID to register to a current SNPN 405. In one novel aspect 480, UE 401 selects the GUTI and NID of corresponding SNPN based on one or more selection rules. At step 482, UE 401 sends REGISTRATION REQUEST to current SNPN 405 to register to SNPN 405. In one embodiment 485, UE 401 indicates the selected registration GUTI in a 5GS mobile identity information element (IE). In another embodiment 486, UE 401 includes the NID of the corresponding prior SNPN in an NID IE.

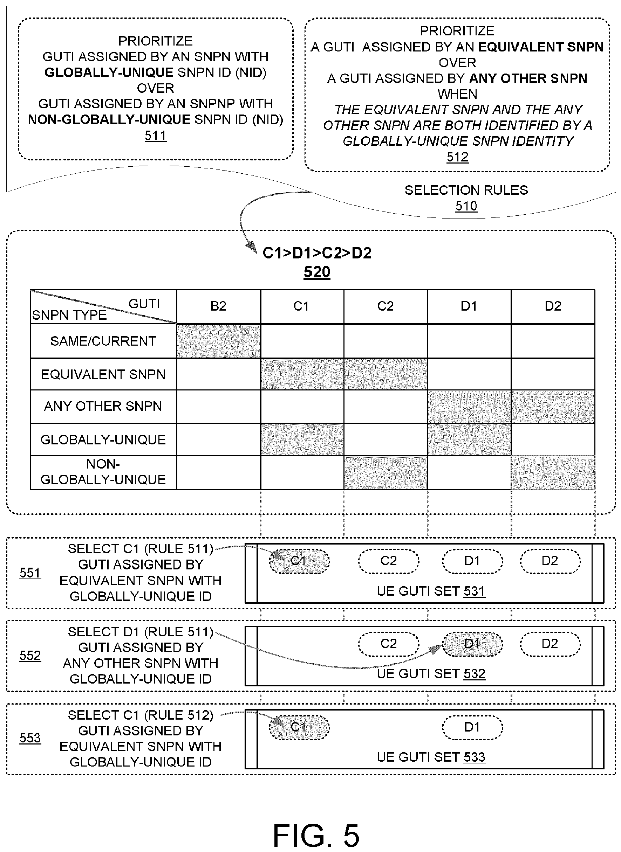

Figure 5 illustrates exemplary diagrams for the selections rules for selecting the GUTI for the registration request to the SNPN in accordance with embodiments of the current inventions. In one novel aspect, the UE maintains a set of GUTIs and selects a registration GUTI to register with a current SNPN based on one or more selection rules. In one embodiment 510, the one or more selection rules include a selection rule 511 and a selection rule 512. Rule 511 prioritizes a GUTI previously assigned by an equivalent SNPN or any other SNPN with a globally-unique SNPN ID over a GUTI previously assigned by an equivalent SNPN or any other SNPN with a non-global-unique SNPN ID. Rule 512 prioritizes a GUTI previously assigned by an equivalent SNPN over a GUTI previously assigned by any other SNPN when the equivalent SNPN and the any other SNPN are both identified by a globally-unique SNPN identity. Furthermore the one or more selections rules further includes prioritizing a GUTI previously assigned by an equivalent SNPN or any other SNPN with a globally-unique SNPN ID over the one or more UE identifiers, which includes subscriber concealed identifier (SUCI) and permanent equipment identifier (PEI).

In one novel aspect, the one or more selection rules are applied to select the GUTI and the NID of its corresponding/ associated SNPN that previously assigned the GUTI. In one exemplary table 520 illustrates the application of the one or more selection rules. During initial registration, the UE handles the 5GS mobile identity IE by selecting a GUTI based on the property /SNPN type of the previously assigning SNPN. Each row of table 520 represents an SNPN property, including the previously assigning SNPN being the same SNPN of the current SNPN that the UE is going to be registered, or is an equivalent SNPN, an any other SNPN, the previously assigning SNPN identifier is globally-unique or non-globally unique. Based on the previously assigning SNPN property, there are five exemplary types of SNPN in each column, B2, C1, C2, D1, and D2. Each SNPN type is identified as:
B2: the UE is registering with a SNPN, the UE holds a valid 5G-GUTI that was previously assigned, over 3GPP access or non-3GPP access, by the same SNPN with which the UE is performing the registration, and the UE is not initiating the initial registration for onboarding services in SNPN, the UE shall indicate the 5G-GUTI in the 5GS mobile identity IE.
C1: the UE is registering with an SNPN, the UE holds a valid 5G-GUTI that was previously assigned, over 3GPP access or non-3GPP access, by an equivalent SNPN which has globally-unique SNPN identity, and the UE is not initiating the initial registration for onboarding services in SNPN, the UE shall indicate the 5G-GUTI in the 5GS mobile identity IE and shall additionally include the NID of the equivalent SNPN in the NID IE.
C2: the UE is registering with an SNPN, the UE holds a valid 5G-GUTI that was previously assigned, over 3GPP access or non-3GPP access, by an equivalent SNPN which has non-globally-unique SNPN identity, and the UE is not initiating the initial registration for onboarding services in SNPN, the UE shall indicate the 5G-GUTI in the 5GS mobile identity IE and shall additionally include the NID of the equivalent SNPN in the NID IE.
D1: the UE is registering with an SNPN, the UE holds a valid 5G-GUTI that was previously assigned, over 3GPP access or non-3GPP access, by any other SNPN which has globally-unique SNPN identity, and the UE is not initiating the initial registration for onboarding services in SNPN, the UE shall indicate the 5G-GUTI in the 5GS mobile identity IE and shall additionally include the NID of the other SNPN in the NID IE.
D2: the UE is registering with an SNPN, the UE holds a valid 5G-GUTI that was previously assigned, over 3GPP access or non-3GPP access, by any other SNPN which has non-globally-unique SNPN identity, and the UE is not initiating the initial registration for onboarding services in SNPN, the UE shall indicate the 5G-GUTI in the 5GS mobile identity IE and shall additionally include the NID of the other SNPN in the NID IE.

In one embodiment 520, during the initial registration, the UE handles the 5GS mobile identity IE in the descending order of C1>D1>C2>D1. In another embodiment, a GUTI previously assigned by an equivalent SNPN or any other SNPN with a globally-unique SNPN ID over the one or more UE identifiers, which includes subscriber concealed identifier (SUCI) and permanent equipment identifier (PEI). Selection list further includes:
E: if a SUCI other than an onboarding SUCI is available, and the UE is not initiating the initial registration for onboarding services in SNPN, the UE shall include the SUCI other than an onboarding SUCI in the 5GS mobile identity IE.
F: if the UE does not hold a valid 5G-GUTI or SUCI other than an onboarding SUCI, and is initiating the initial registration for emergency services, the PEI shall be included in the 5GS mobile identity IE.
G: if the UE is initiating the initial registration for onboarding services in SNPN, an onboarding SUCI shall be included in the 5GS mobile identity IE.

As illustrated, following the one or more selection rules of 510, a 5G-GUTI that was previously assigned, over 3GPP access or non-3GPP access, by an equivalent SNPN having a globally-unique SNPN identity is preferred/ prioritized over a 5G-GUTI that was previously assigned over 3GPP access or non-3GPP access by an equivalent SNPN having a non-globally unique SNPN identity. Diagrams 551, 552, and 552 illustrate exemplary embodiments of GUTI selection following Rule 510. In one embodiment 551, applying rule 511, the set of GUTIs 531 maintained by the UE includes a first valid 5G-GUTI that was previously assigned by an equivalent SNPN identified by a globally-unique SNPN identity, and one or more other GUTIs comprising a second valid 5G-GUTI that was previously assigned by any other SNPN identified by a globally-unique SNPN identity, a third valid 5G-GUTI that was previously assigned by an equivalent SNPN identified by a non-globally-unique SNPN identity, and a fourth valid 5G-GUTI that was previously assigned by any other SNPN identified by a non-globally-unique SNPN identity, and wherein the UE selects the first valid 5G-GUTI as the registration GUTI. In another embodiment 552, applying rule 512, the set of GUTIs 532 maintained by the UE includes a second valid 5G-GUTI that was previously assigned by any other SNPN identified by a globally-unique SNPN identity, and one or more other GUTIs comprising a third valid 5G-GUTI that was previously assigned by an equivalent SNPN identified by a non-globally-unique SNPN identity, and a fourth valid 5G-GUTI that was previously assigned by any other SNPN identified by a non-globally-unique SNPN identity, and wherein the UE selects the second valid 5G-GUTI as the registration GUTI. In yet another embodiment 553, applying rule 512, set of GUTIs 533 maintained by the UE includes a first valid 5G-GUTI that was previously assigned by an equivalent SNPN identified by a globally-unique SNPN identity, a second valid 5G-GUTI that was previously assigned by any other SNPN identified by a globally-unique SNPN identity, and wherein the UE selects the first valid 5G-GUTI as the registration GUTI.

In other embodiments, the one or more selection rules further include prioritizing one or more GUTIs previously assigned, over 3GP access or non-3GPP access, by an equivalent SNPN/PLMN. In one embodiment, the UE selects the newest / most recently assigned GUTI. In another embodiment, the UE selects the oldest / least recently assigned GUTI. In yet another embodiment, assuming the equivalent SNPN on a SNPN list all have globally-unique SNPN identifiers, the 5G-GUTI assigned by an equivalent SNPN/PLMN that is the first SNPN/PLMN in the equivalent SNPN/PLMN list >(more preferred than) The 5G-GUTI assigned by an equivalent SNPN/PLMN that is the second SNPN/PLMN in the equivalent SNPN/PLMN list >(more preferred than) The 5G-GUTI assigned by an equivalent SNPN/PLMN that is the third SNPN/PLMN in the equivalent SNPN/PLMN list, and etc. In one embodiment, assuming SNPNs having the same other properties, including both are equivalent SNPN with globally-unique SNPN identities, or both are any other SNPN with globally-unique SNPN identities, the 5G-GUTI assigned over 3GPP access is preferred to be used to indicate by the UE, if the current procedure is over 3GPP access, and 5G-GUTI assigned over non-3GPP access is preferred to be used to indicate by the UE, if the current procedure is over non-3GPP access.

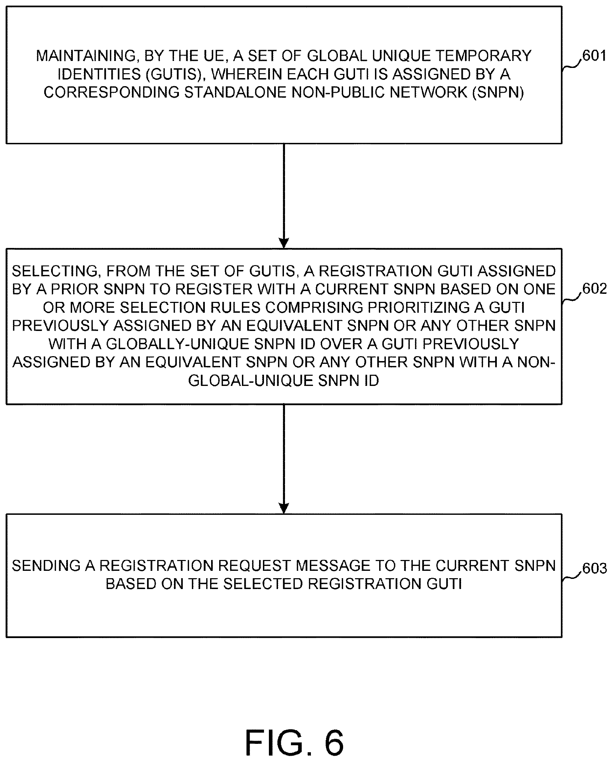

Figure 6 illustrates an exemplary flow chart for the UE selecting a GUTI assigned by corresponding SNPN for the registration request to a current SNPN in accordance with embodiments of the current invention. At step 601, the UE maintains a set of global unique temporary identities (GUTIs), wherein each GUTI is assigned by a corresponding standalone non-public network (SNPN). At step 602, the UE selects, from the set of GUTIs, a registration GUTI assigned by a prior SNPN to register with a current SNPN based on one or more selection rules comprising prioritizing a GUTI previously assigned by an equivalent SNPN or any other SNPN with a globally-unique SNPN ID over a GUTI previously assigned by an equivalent SNPN or any other SNPN with a non-global-unique SNPN ID. At step 603, the UE sends a registration request message to the current SNPN based on the selected registration GUTI.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method for a user equipment (UE), **characterized by** comprising:
maintaining, by the UE, a set of global unique temporary identities (GUTIs), wherein each GUTI is assigned by a corresponding standalone non-public network (SNPN);
selecting, from the set of GUTIs, a registration GUTI assigned by a prior SNPN to register with a current SNPN based on one or more selection rules comprising prioritizing a GUTI previously assigned by an equivalent SNPN or any other SNPN with a globally-unique SNPN ID over a GUTI previously assigned by an equivalent SNPN or any other SNPN with a non-global-unique SNPN ID; and
sending a registration request message to the current SNPN based on the selected registration GUTI.

2. A user equipment (UE), **characterized by** comprising:
a radio frequency (RF) module that transmits and receives radio signals in a wireless network;
an identity module that maintains a set of global unique temporary identities (GUTIs), wherein each GUTI is assigned by a corresponding standalone non-public network (SNPN);
a selection module that selects, from the set of GUTIs, a registration GUTI assigned by a prior SNPN based on one or more selection rules comprising prioritizing a GUTI previously assigned by an equivalent SNPN or any other SNPN with a globally-unique SNPN ID over a GUTI previously assigned by an equivalent SNPN or any other SNPN with a non-global-unique SNPN ID; and
a request module that sends a registration request message to the current SNPN based on the selected registration GUTI.

3. The method of claim 1 or the UE of claim 2, **characterized in that** each SNPN is identified by a public land mobile network (PLMN) identifier (ID) and a network ID (NID), and wherein the UE maintains the NID of each SNPN with corresponding GUTI.

4. The method or the UE of claim 3, **characterized in that** the UE indicates the selected registration GUTI in a 5GS mobile identity information element (IE) and includes the NID of the corresponding prior SNPN in an NID IE.

5. The method of claim 1 or the UE of claim 2, **characterized in that** the set of GUTIs maintained by the UE includes a first valid 5G-GUTI that was previously assigned by an equivalent SNPN identified by a globally-unique SNPN identity, and one or more other GUTIs comprising a second valid 5G-GUTI that was previously assigned by any other SNPN identified by a globally-unique SNPN identity, a third valid 5G-GUTI that was previously assigned by an equivalent SNPN identified by a non-globally-unique SNPN identity, and a fourth valid 5G-GUTI that was previously assigned by any other SNPN identified by a non-globally-unique SNPN identity, and wherein the UE selects the first valid 5G-GUTI as the registration GUTI.

6. The method of claim 1 or the UE of claim 2, **characterized in that** the set of GUTIs maintained by the UE includes a second valid 5G-GUTI that was previously assigned by any other SNPN identified by a globally-unique SNPN identity, and one or more other GUTIs comprising a third valid 5G-GUTI that was previously assigned by an equivalent SNPN identified by a non-globally-unique SNPN identity, and a fourth valid 5G-GUTI that was previously assigned by any other SNPN identified by a non-globally-unique SNPN identity, and wherein the UE selects the second valid 5G-GUTI as the registration GUTI.

7. The method of claim 1 or the UE of claim 2, **characterized in that** the set of GUTIs are assigned by corresponding equivalent SNPN or any other SNPN over 3GPP access or non-3GPP access.

8. The method of claim 1 or the UE of claim 2, **characterized in that** the UE further maintains one or more UE identifiers comprising: subscriber concealed identifier (SUCI) and permanent equipment identifier (PEI), and wherein the one or more selection rules comprising prioritizing a GUTI previously assigned by an equivalent SNPN or any other SNPN with a globally-unique SNPN ID over the one or more UE identifiers.

9. The method of claim 1 or the UE of claim 2, **characterized in that** the one or more selection rules further comprising: prioritizing a GUTI previously assigned by an equivalent SNPN over a GUTI previously assigned by any other SNPN when the equivalent SNPN and the any other SNPN are both identified by a globally-unique SNPN identity.

10. The method or the UE of claim 8, **characterized in that** the set of GUTIs maintained by the UE includes a first valid 5G-GUTI that was previously assigned by an equivalent SNPN identified by a globally-unique SNPN identity, a second valid 5G-GUTI that was previously assigned by any other SNPN identified by a globally-unique SNPN identity, and wherein the UE selects the first valid 5G-GUTI as the registration GUTI.
